# EUROPEAN PATENT APPLICATION

(11) **EP 4 819 231 A1**
(43) Date of publication of application: **07.10.2026**
(21) Application number: 24913792.8
(22) Date of filing: 11.12.2024
(51) Int. Cl.: H01M 4/36, H01M 4/583, H01M 4/66, H01M 10/052, H01M 4/02

(54) **NEGATIVE ELECTRODE FOR LITHIUM SECONDARY BATTERY AND LITHIUM SECONDARY BATTERY COMPRISING SAME**

(30) Priority: 28.12.2023 KR 20230195013
(71) Applicant: SK innovation Co., Ltd., Seoul 03188 (KR); SK On Co., Ltd., Seoul 03161 (KR)
(72) Inventor: EOM, Ki Joo, Daejeon 34124 (KR); LEE, Hyun Ji, Daejeon 34124 (KR); JANG, Hyun Joong, Daejeon 34124 (KR); KANG, Hyeon Soo, Daejeon 34124 (KR); SONG, Yeon Hwa, Daejeon 34124 (KR); YOON, Geon Hee, Daejeon 34124 (KR)
(74) Representative: Prüfer & Partner mbB Patentanwälte · Rechtsanwälte
(86) International application number: PCT/KR2024/096724
(87) International publication number: WO 2025/143988

(57) **Abstract**

An anode for a lithium secondary battery according to embodiments of the present disclosure includes an anode current collector, a first anode active material layer disposed on at least one surface of the anode current collector, and a second anode active material layer disposed on the first anode active material layer and including artificial graphite. A first Raman peak area ratio of the first anode active material layer is 1 to 2, and a second Raman peak area ratio of the second anode active material layer is 0.2 to 0.5.

## Description

### [Technical Field]

The disclosure of the present application relates to an anode for a lithium secondary battery and a lithium secondary battery including the same.

### [Background Art]

Secondary batteries are batteries capable of being repeatedly charged and discharged, and have been widely applied as power sources for portable electronic communication devices such as camcorders, mobile phones, and laptop PCs with the development of information, communication, and display industries. In addition, recently, battery packs including secondary batteries have been developed and applied as power sources for eco-friendly vehicles such as electric vehicles.

Examples of secondary batteries may include a lithium secondary battery, a nickelcadmium battery, and a nickel-metal hydride battery. Among these, the lithium secondary battery has been actively developed and applied due to its high operating voltage, high energy density per unit weight, and advantages in charging speed and weight reduction.

Recently, as the application scope of lithium secondary batteries has expanded, the development of lithium secondary batteries having higher capacity and power output properties has been actively pursued. For example, high-capacity silicon-based materials may be included in the anode active material.

However, the cycle life properties of the electrode during fast charging may deteriorate due to the volume expansion rate and low conductivity of silicon.

### [Disclosure]

### [Technical Problem]

According to an aspect of the present disclosure, an anode for a lithium secondary battery with improved cycle life properties may be provided.

According to an aspect of the present disclosure, a lithium secondary battery with improved cycle life properties may be provided.

### [Technical Solution]

An anode for a lithium secondary battery according to exemplary embodiments of the present disclosure includes: an anode current collector; a first anode active material layer disposed on at least one surface of the anode current collector; and a second anode active material layer disposed on the first anode active material layer and including artificial graphite, wherein a first Raman peak area ratio of the first anode active material layer defined by Equation 1 below is 1 to 2, and a second Raman peak area ratio of the second anode active material layer defined by Equation 2 below is 0.2 to 0.5. [Equation 1] $First Raman peak area ratio = AD 1 / AG 1$ [Equation 2] $Second Raman peak area ratio = AD 2 / AG 2$

In Equation 1 and Equation 2, AD1 denotes an area of a peak having the maximum height in a wavenumber range of 1320 cm⁻¹ to 1390 cm⁻¹ of the Raman spectroscopic spectrum of the first anode active material layer, AG1 denotes an area of a peak having the maximum height in a wavenumber range of 1575 cm⁻¹ to 1590 cm⁻¹ of the Raman spectroscopic spectrum of the first anode active material layer.

AD2 denotes an area of a peak having the maximum height in a wavenumber range of 1320 cm⁻¹ to 1390 cm⁻¹ of the Raman spectroscopic spectrum of the second anode active material layer, and AG2 denotes an area of a peak having the maximum height in a wavenumber range of 1575 cm⁻¹ to 1590 cm⁻¹ of the Raman spectroscopic spectrum of the second anode active material layer.

In some embodiments, the first Raman peak area ratio may be 3 times to 5 times the second Raman peak area ratio.

In some embodiments, the first Raman peak area ratio may be 1.2 to 1.5.

In some embodiments, the second Raman peak area ratio may be 0.3 to 0.4.

In some embodiments, the second anode active material layer may have a thickness of 30% to 70% relative to the combined thickness of the first anode active material layer and the second anode active material layer.

In some embodiments, the second anode active material layer may have a thickness of 40% to 60% relative to the combined thickness of the first anode active material layer and the second anode active material layer.

In some embodiments, the first anode active material layer may include natural graphite.

In some embodiments, the natural graphite may include a carbon coating disposed on a surface thereof.

In some embodiments, the carbon coating may include amorphous carbon.

In some embodiments, the first anode active material layer may include a plurality of first pores, and the second anode active material layer may include a plurality of second pores.

In some embodiments, a ratio of the second porosity of the second anode active material layer defined by Equation 4 below to the first porosity of the first anode active material layer defined by Equation 3 below may be 1.2 to 2.0. [Equation 3] $First porosity \left(%\right) = \left(VP1/VL1\right) \times 100$ [Equation 4] $Second porosity \left(%\right) = \left(VP2/VL2\right) \times 100$

In Equation 3 and Equation 4, VL1 denotes a volume of the first anode active material layer, VP1 denotes the total volume of the plurality of first pores, VL2 denotes a volume of the second anode active material layer, and VP2 denotes the total volume of the plurality of second pores.

In some embodiments, the first porosity may be 15% to 25%.

In some embodiments, the second porosity may be 25% to 40%.

A lithium secondary battery according to exemplary embodiments of the present disclosure includes: the above-described anode for a lithium secondary battery; and a cathode disposed opposite the anode.

### [Advantageous Effects]

According to an embodiment of the present disclosure, the structural stability, cycle life properties, and fast-charging performance of the anode for a lithium secondary battery may be improved. In addition, for example, costs may be reduced.

According to an embodiment of the present disclosure, the occurrence of cracks in the anode active material layer may be suppressed while preventing excessive deterioration of crystallinity.

According to an embodiment of the present disclosure, the resistance of the anode may be reduced while the stability thereof may be improved.

The anode for a lithium secondary battery and the lithium secondary battery including the same according to the present disclosure may be widely applied in green technology fields including electric vehicles, battery charging stations, and renewable energy systems using batteries, such as photovoltaics and wind power generation. The anode for a lithium secondary battery and the lithium secondary battery including the same according to the present disclosure may be used in eco-friendly electric vehicles and hybrid vehicles to suppress air pollution and greenhouse gas emissions, thereby contributing to mitigating climate change.

### [Description of Drawings]

FIG. 1 is a schematic cross-sectional view illustrating an anode for a lithium secondary battery according to exemplary embodiments.
FIGS. 2 and 3 are a schematic plan view and a schematic cross-sectional view, respectively, illustrating a lithium secondary battery according to exemplary embodiments.
FIG. 4 is a scanning electron microscopy (SEM) image showing a cross-section of the anode of Example 1.
FIG. 5 is an SEM image showing a cross-section of the anode of Example 2.
FIG. 6 is an SEM image showing a cross-section of the anode of Comparative Example 1.
FIG. 7 is a Raman spectroscopic spectrum of each of the first anode active material layer and the second anode active material layer of Example 1.

### [Mode for Invention]

Embodiments of the present disclosure provide an anode for a lithium secondary battery including a plurality of anode active material layers (hereinafter, also abbreviated as an "anode"). In addition, embodiments of the present disclosure provide a lithium secondary battery including the anode (hereinafter, also abbreviated as a "secondary battery").

Hereinafter, embodiments of the present disclosure will be described in detail. However, the embodiments are merely illustrative, and the present disclosure is not limited to the specific embodiments described as examples.

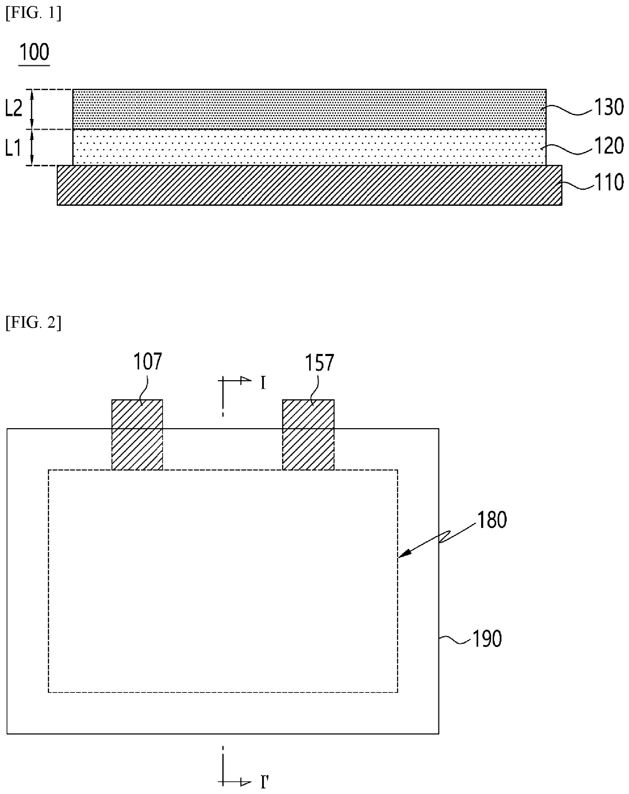

FIG. 1 is a schematic cross-sectional view illustrating an anode for a lithium secondary battery according to exemplary embodiments.

Referring to FIG. 1, an anode 100 may include an anode current collector 110, a first anode active material layer 120, and a second anode active material layer 130.

For example, the anode current collector 110 may include copper foil, nickel foil, stainless steel foil, titanium foil, nickel foam, copper foam, or a polymer substrate coated with a conductive metal. These may be used alone or in combination of two or more thereof. For example, the anode current collector 110 may have a thickness of 10 µm to 50 µm.

The first anode active material layer 120 may be disposed on at least one surface of the anode current collector 110.

In some embodiments, the first anode active material layer 120 may include natural graphite. Accordingly, the adhesion strength between the anode current collector 110 and the first anode active material layer 120 and capacity properties may be improved.

According to an embodiment, the first anode active material layer 120 may be disposed in direct contact with the anode current collector 110.

The content of natural graphite based on the total weight of the first anode active material layer 120 may be 40% by weight ("wt%") or more, 50 wt% or more, 60 wt% or more, 70 wt% or more, 80 wt% or more, or 90 wt% or more.

The content of natural graphite based on the total weight of the first anode active material layer 120 may be 99 wt% or less, 95 wt% or less, 90 wt% or less, or 85 wt% or less.

In one embodiment, the anode active material included in the first anode active material layer 120 may be substantially composed of natural graphite.

In exemplary embodiments, the second anode active material layer 130 including artificial graphite may be disposed on the first anode active material layer 120. Accordingly, the cycle life properties and fast-charging performance of the anode 100 may be improved.

According to an embodiment, the second anode active material layer 130 may be disposed in direct contact with the first anode active material layer 120.

The content of artificial graphite based on the total weight of the second anode active material layer 130 may be 40 wt% or more, 50 wt% or more, 60 wt% or more, 70 wt% or more, 80 wt% or more, or 90 wt% or more.

The content of artificial graphite based on the total weight of the second anode active material layer 130 may be 99 wt% or less, 95 wt% or less, 90 wt% or less, or 85 wt% or less.

In one embodiment, the anode active material included in the second anode active material layer 130 may be substantially composed of artificial graphite.

In some embodiments, at least one of the first anode active material layer 120 and the second anode active material layer 130 may further include a silicon-based active material. Accordingly, the capacity properties of the secondary battery may be improved.

For example, the silicon-based active material may include Si, SiOₓ (0<x<2), metal-doped SiOₓ (0<x<2), or a silicon-carbon composites. The metal may include lithium and/or magnesium, and the metal-doped SiOₓ (0<x<2) may include a metal silicate.

According to an embodiment, the first anode active material layer 120 may not include the silicon-based active material, and the second anode active material layer 130 may include the silicon-based active material. Accordingly, the capacity properties of the secondary battery may be improved while the cycle life properties may be maintained or improved.

In some embodiments, the first anode active material layer 120 and the second anode active material layer 130 may include different anode active materials.

For example, the anode 100 may include the first anode active material layer 120 including natural graphite and the second anode active material layer 130 including artificial graphite, thereby improving the structural stability, cycle life properties, and fast-charging performance while reducing costs.

In exemplary embodiments, a first Raman peak area ratio of the first anode active material layer 120 defined by Equation 1 below may be 1 to 2, and a second Raman peak area ratio of the second anode active material layer 130 defined by Equation 2 below may be 0.2 to 0.5. [Equation 1] $First Raman peak area ratio = AD 1 / AG 1$ [Equation 2] $Second Raman peak area ratio = AD 2 / AG 2$

In Equation 1 and Equation 2, AD1 denotes an area of a peak having the maximum height in a wavenumber range of 1320 cm⁻¹ to 1390 cm⁻¹ of the Raman spectroscopic spectrum of the first anode active material layer 120 (e.g., the D band of the Raman spectroscopic spectrum). AG1 denotes an area of a peak having the maximum height in a wavenumber range of 1575 cm⁻¹ to 1590 cm⁻¹ of the Raman spectroscopic spectrum of the first anode active material layer 120 (e.g., the G band of the Raman spectroscopic spectrum). AD2 denotes an area of a peak having the maximum height in a wavenumber range of 1320 cm⁻¹ to 1390 cm⁻¹ of the Raman spectroscopic spectrum of the second anode active material layer 130. AG2 denotes an area of a peak having the maximum height in a wavenumber range of 1575 cm⁻¹ to 1590 cm⁻¹ of the Raman spectroscopic spectrum of the second anode active material layer 130.

In Equation 1 and Equation 2, when measuring AD1, AD2, AG1, and AG2, the peak heights at the wavenumber points of 1000 cm⁻¹ and 1800 cm⁻¹ may be set as the base heights, and the peak areas may be measured.

For example, the first Raman peak area ratio and the second Raman peak area ratio may indicate a degree of amorphousness. For example, as the first Raman peak area ratio and the second Raman peak area ratio increase, the amorphousness of the first and second anode active material layers 120 and 130 may increase.

Within the range of the first and second Raman peak area ratios, the occurrence of cracks in the first anode active material layer 120 may be suppressed while preventing excessive deterioration of crystallinity, and the resistance of the anode 100 may be reduced while the stability thereof may be improved.

The area of the Raman peak may have a technically different meaning from the intensity or height of the Raman peak within the same wavenumber range. For example, in the Raman spectroscopic spectrum, the peak areas of two different peaks having the same height may differ. Accordingly, the Raman peak area ratio may include more information regarding the physical properties of a measurement target than the Raman peak intensity ratio or the Raman peak height ratio.

In some embodiments, the first Raman peak area ratio may be 1.2 to 1.5 or 1.28 to 1.38. Accordingly, the structural stability of the first anode active material layer 120 may be further improved.

In some embodiments, the second Raman peak area ratio may be 0.3 to 0.4 or 0.32 to 0.38. Accordingly, the resistance of the anode 100 may be further reduced.

In some embodiments, the first Raman peak area ratio may be 3 times to 5 times, or 3.5 times to 4.5 times the second Raman peak area ratio. Within this range, the amorphousness of the first anode active material layer 120 and the second anode active material layer 130 may be appropriately controlled to improve the cycle life properties, fast-charging performance, and power output properties.

In some embodiments, the second anode active material layer 130 may have a thickness L2 of 30% to 70% or 40% to 60% relative to a sum of a thickness L1 of the first anode active material layer 120 and the thickness L2 of the second anode active material layer 130. Within this range, an increase in resistance may be suppressed while improving the capacity properties, structural stability, and fast charge-discharge properties of the anode 100.

The thickness L1 of the first anode active material layer 120 may be the shortest distance from a point at which the first anode active material layer 120 contacts the anode current collector 110 to a point at which the first anode active material layer 120 contacts the second anode active material layer 130. The thickness L2 of the second anode active material layer 130 may be the shortest distance from a point at which the second anode active material layer 130 contacts the first anode active material layer 120 to the outermost surface of the second anode active material layer 130.

In some embodiments, the natural graphite contained in the first anode active material layer 120 may include a carbon coating disposed on a surface thereof. Accordingly, the power output properties and cycle life properties of the anode 100 may be improved.

According to an embodiment, the carbon coating may include amorphous carbon. Accordingly, the structural stability of the natural graphite may be further improved and the resistance may be reduced. As a result, the first Raman peak area ratio may be adjusted to within a desired range.

In some embodiments, the first anode active material layer 120 may include a plurality of first pores, and the second anode active material layer 130 may include a plurality of second pores.

In some embodiments, a ratio of the second porosity of the second anode active material layer 130 defined by Equation 4 below to the first porosity of the first anode active material layer 120 defined by Equation 3 below may be 1.2 to 2.0, and in some embodiments, may be 1.4 to 1.8. [Equation 3] $First porosity \left(%\right) = \left(VP1/VL1\right) \times 100$ [Equation 4] $Second porosity \left(%\right) = \left(VP2/VL2\right) \times 100$

In Equation 3 and Equation 4, VL1 denotes a volume of the first anode active material layer 120, VP1 denotes the total volume of the plurality of first pores, VL2 denotes a volume of the second anode active material layer 130, and VP2 denotes the total volume of the plurality of second pores.

For example, VL1, VP1, VL2, and VP2 of Equation 3 and Equation 4 may be measured using 3D X-ray microscopy (XRM).

For example, VL1 of Equation 3 may be the total volume of the first anode active material layer 120 including the total volume of the plurality of first pores, and VL2 of Equation 4 may be the total volume of the second anode active material layer 130 including the total volume of the plurality of second pores.

Within the above porosity range, both the improvement in structural stability by the first anode active material layer 120 and the improvement in fast-charging performance and power output properties by the second anode active material layer 130 may be achieved within a desired range.

For example, the second anode active material layer 130 may have greater porosity than the first anode active material layer 120, such that the structural stability and fast-charging cycle life properties may be improved, and the energy density may be improved or maintained.

For example, a 3D modeling image of a sample of the anode active material layer 120 or 130 may be obtained using XRM. The first porosity and the second porosity may be measured by analyzing the 3D modeling image using analysis software.

For example, the first porosity may be measured in an area of the first anode active material layer 120 spaced about 10 µm or more from the anode current collector 110. For example, the second porosity may be measured in an area of the second anode active material layer 130 spaced about 10 µm or more from the outermost surface of the second anode active material layer 130. Accordingly, the accuracy of the measurement may be improved, and the reliability thereof may be enhanced.

In some embodiments, the first porosity may be 15% to 25%. Within this range, the adhesion strength between the first anode active material layer 120 and the anode current collector 110 may be improved, while the capacity properties may be maintained or improved.

In some embodiments, the second porosity may be 25% to 40%. Within this range, the fast-charging performance and power output properties of the second anode active material layer 130 may be improved, while the energy density may be maintained or improved.

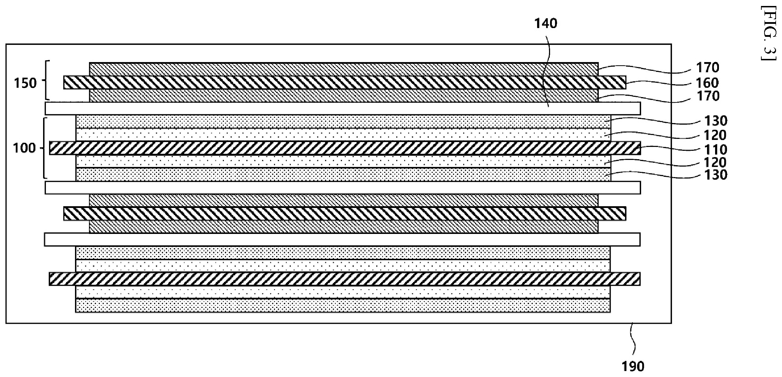

FIGS. 2 and 3 are a schematic plan view and a schematic cross-sectional view, respectively, illustrating a lithium secondary battery according to exemplary embodiments. For example, FIG. 3 is a cross-sectional view taken along line I-I' of FIG. 2 in the thickness direction.

Referring to FIGS. 2 and 3, the lithium secondary battery may include the above-described anode 100 described above and a cathode 150 disposed opposite the anode 100.

The cathode 150 may include a cathode current collector 160 and a cathode active material layer 170 disposed on at least one surface of the cathode current collector 160.

The cathode current collector 160 may include stainless steel, nickel, aluminum, titanium, or an alloy thereof. The cathode current collector 160 may also include aluminum or stainless steel surface-treated with carbon, nickel, titanium or silver. For example, the cathode current collector 160 may have a thickness of 10 µm to 50 µm.

The cathode active material layer 170 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn), and aluminum (Al).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, 0.9≤x≤1.2, 0.6≤a≤0.99, 0.01≤b≤0.4, and -0.5≤z≤0.1. As described above, M may include Co, Mn and/or Al.

The chemical structure represented by Formula 1 indicates a bonding relationship among elements included in the layered structure or the crystal structure of the cathode active material, and does not exclude the presence of additional elements. For example, M may include Co and/or Mn, and Co and/or Mn may be provided as main active elements of the cathode active material together with Ni. Here, it should be understood that Formula 1 is provided to express the bonding relationship among the main active elements and encompasses the introduction and substitution of additional elements.

In one embodiment, the cathode active material may further include auxiliary elements which are added to the main active elements, in order to enhance the chemical stability thereof or the layered structure/crystal structure. The auxiliary elements may be incorporated into the layered structure/crystal structure together with the main active elements to form bonds, and it should be understood that this case is also included within the range of the chemical structure represented by Formula 1.

The auxiliary elements may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary elements may also act, for example, as an auxiliary active element that contributes to the capacity/power output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the auxiliary element described above. In Formula 1-1, 0.9≤x≤1.2, 0.6≤a≤0.99, 0.01≤b1+b2≤0.4, and - 0.5≤z≤0.1.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating elements or the doping elements.

The coating element or the doping element may be present on the surface of the lithium-nickel metal oxide particles, or may penetrate through the surface of the lithium-nickel metal oxide particles to be incorporated into the bonding structure represented by Formula 1 or Formula 1-1 above.

The cathode active material may include a nickel-cobalt-manganese (NCM)-based lithium oxide. In this case, an NCM-based lithium oxide with an increased content of nickel may be used.

Nickel may serve as a transition metal associated with the power output and capacity of the lithium secondary battery. Therefore, as described above, by employing a high-nickel-content (high-Ni) composition in the cathode active material, a high-capacity cathode and a high-capacity lithium secondary battery may be provided.

However, as the content of Ni increases, the long-term storage stability and cycle life stability of the cathode or the secondary battery may be relatively reduced, and side reactions with the electrolyte may also increase. Nevertheless, according to exemplary embodiments, by including Co while maintaining electrical conductivity, and including Mn to improve cycle stability and capacity retention, both properties may be enhanced.

The content of Ni (e.g., a mole fraction of nickel based on the total molar amount of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, an Li-rich layered oxide (LLO)/over-lithiated oxide (OLO)-based active material, an Mn-rich-based active material, or a Co-less active material, each having a chemical structure or a crystal structure represented by Formula 2. These may be used alone or in combination of two or more thereof.

[Formula 2] p[Li₂MnO₃]·(1-p)[Li_{q}JO₂]

In Formula 2, 0<p<1 and 0.9≤q≤1.2, and J may include at least one element selected from the group consisting of Mn, Ni, Co, Fe, Cr, V, Cu, Zn, Ti, Al, Mg and B.

The cathode active material may be mixed in a solvent to prepare a cathode slurry. The cathode slurry may be coated onto at least one surface of the cathode current collector 160, then dried and roll-pressed to prepare the cathode active material layer 170. The coating may include processes such as gravure coating, slot die coating, simultaneous multilayer die coating, imprinting, doctor blade coating, dip coating, bar coating or casting or the like. The cathode active material layer 170 may further include a binder, and may optionally further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 170 may be decreased and the amount of the cathode active material may be relatively increased. Accordingly, the power output properties and capacity properties of the secondary battery may be improved.

The conductive material may be added to the cathode active material layer 170 in order to enhance the conductivity thereof and/or the mobility of lithium ions or electrons. For example, the conductive material may include carbon-based conductive materials such as graphite, carbon black, acetylene black, Ketjen black, graphene, carbon nanotubes (CNTs), vapor-grown carbon fibers (VGCF), or carbon fibers; and/or metal-based conductive materials such as tin, tin oxide, and titanium oxide; as well as perovskite materials such as LaSrCoO₃, and LaSrMnO₃. These may be used alone or in combination of two or more thereof.

The cathode slurry may further include a thickener and/or a dispersant. In one embodiment, the cathode slurry may include a thickener such as carboxymethyl cellulose (CMC).

The first anode active material layer 120 may be disposed on at least one surface of the anode current collector 110, and the second anode active material layer 130 may be disposed on the first anode active material layer 120.

The first anode active material may be mixed in a solvent to prepare a first anode slurry. The first anode slurry may be coated or deposited on at least one surface of the anode current collector 110, and then dried and roll-pressed to prepare the first anode active material layer 120. The coating may include processes such as gravure coating, slot die coating, simultaneous multilayer die coating, imprinting, doctor blade coating, dip coating, bar coating or casting or the like.

The second anode active material may be mixed in a solvent to prepare a second anode slurry. The second anode slurry may be coated or deposited on the first anode active material layer 120, and then dried and roll-pressed to prepare the second anode active material layer 130. The coating may be performed using a method substantially identical to the coating method described above for the first anode active material layer 120.

The first and second anode active material layers 120 and 130 may further include a binder, and may optionally further include a conductive material, a thickener or the like.

The solvent contained in the anode slurry may include water, pure water, deionized water, distilled water, ethanol, isopropanol, methanol, acetone, n-propanol, t-butanol and the like. These may be used alone or in combination of two or more thereof.

The above-described materials that can be used when preparing the cathode 150 as the binder, conductive material and thickener may also be used for the anode.

In some embodiments, a styrene-butadiene rubber (SBR)-based binder, carboxymethyl cellulose (CMC), a polyacrylic acid-based binder, a poly(3,4-ethylenedioxythiophene) (PEDOT)-based binder, and the like may be used as an anode binder. These may be used alone or in combination of two or more thereof.

In exemplary embodiments, a separator 140 may be interposed between the cathode 150 and the anode 100. The separator 140 may be configured to prevent an electrical short-circuit between the cathode 150 and the anode 100, and to allow the flow of ions. For example, the separator may have a thickness of 10 µm to 20 µm.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, or an ethylene/methacrylate copolymer, etc. These may be used alone or in combination of two or more thereof.

The porous nonwoven fabric may include glass fibers having a high melting point, polyethylene terephthalate fibers, etc.

The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, an electrode cell may be defined by the cathode 150, the anode 100 and the separator 140, and a plurality of electrode cells may be stacked to form, for example, a jelly roll type electrode assembly 180. For example, the electrode assembly 180 may be formed by winding, stacking, z-folding, or stack-folding the separator 140.

The electrode assembly 180 may be accommodated in a case 190 together with an electrolyte to define a lithium secondary battery. According to exemplary embodiments, a non-aqueous electrolyte solution may be used as the electrolyte.

The non-aqueous electrolyte solution may include a lithium salt as an electrolyte and an organic solvent, the lithium salt may be represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻_{,} CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be exemplified.

The organic solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, γ-butyrolactone, propylene sulfite and the like. These may be used alone or in combination of two or more thereof.

The non-aqueous electrolyte solution may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described non-aqueous electrolyte solution. In this case, the lithium secondary battery may be manufactured in the form of an all-solid-state battery. In addition, a solid electrolyte layer may be disposed between the cathode 150 and the anode 100 in place of the above-described separator 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, and Z is Ge, Zn or Ga), Li₂S-GeS₂, Li₂S-SiS₂-Li₃PO₄, Li₂S-SiS₂-LiₚMO_{q} (p and q are positive numbers, and M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, or the like.

As shown in FIGS. 2 and 3, electrode tabs (a cathode tab and an anode tab) may protrude from the cathode current collector 160 and the anode current collector 110, respectively, which belong to respective electrode cells, and may extend to one side of the case 190. The electrode tabs may be welded together with the one side of the case 190 to form electrode leads (a cathode lead 157 and an anode lead 107) that extend or are exposed to the outside of the case 190.

The lithium secondary battery may be manufactured, for example, in a cylindrical, prismatic, pouch, or coin type using a can.

The above-described embodiments of the present disclosure include the following aspects and may be implemented through at least one of the following aspects.

An anode for a lithium secondary battery according to a first aspect of the present disclosure includes: an anode current collector; a first anode active material layer disposed on at least one surface of the anode current collector; and a second anode active material layer disposed on the first anode active material layer and including artificial graphite, wherein a first Raman peak area ratio of the first anode active material layer defined by Equation 1 below is 1 to 2, and a second Raman peak area ratio of the second anode active material layer defined by Equation 2 below is 0.2 to 0.5. [Equation 1] $First Raman peak area ratio = AD 1 / AG 1$ [Equation 2] $Second Raman peak area ratio = AD 2 / AG 2$

In Equation 1 and Equation 2, AD1 denotes an area of a peak having the maximum height in a wavenumber range of 1320 cm⁻¹ to 1390 cm⁻¹ of the Raman spectroscopic spectrum of the first anode active material layer, AG1 denotes an area of a peak having the maximum height in a wavenumber range of 1575 cm⁻¹ to 1590 cm⁻¹ of the Raman spectroscopic spectrum of the first anode active material layer.

AD2 denotes an area of a peak having the maximum height in a wavenumber range of 1320 cm⁻¹ to 1390 cm⁻¹ of the Raman spectroscopic spectrum of the second anode active material layer, and AG2 denotes an area of a peak having the maximum height in a wavenumber range of 1575 cm⁻¹ to 1590 cm⁻¹ of the Raman spectroscopic spectrum of the second anode active material layer.

In a second aspect, according to the first aspect, the first Raman peak area ratio may be 3 to 5 times the second Raman peak area ratio.

In a third aspect, according to the first aspect or the second aspect, the first Raman peak area ratio may be 1.2 to 1.5.

In a fourth aspect, according to any one of the first to the third aspects, the second Raman peak area ratio may be 0.3 to 0.4.

In a fifth aspect, according to any one of the first to the fourth aspects, the second anode active material layer may have a thickness of 30% to 70% relative to the combined thickness of the first anode active material layer and the second anode active material layer.

In a sixth aspect, according to any one of the first to the fifth aspects, the second anode active material layer may have a thickness of 40% to 60% relative to the combined thickness of the first anode active material layer and the second anode active material layer.

In a seventh aspect, according to any one of the first to the sixth aspects, the first anode active material layer may include natural graphite.

In an eighth aspect, according to the seventh aspect, the natural graphite may include a carbon coating formed on a surface thereof.

In a ninth aspect, according to the eighth aspect, the carbon coating may include amorphous carbon.

In a tenth aspect, according to any one of the first aspect to the ninth aspect, the first anode active material layer may include a plurality of first pores, and the second anode active material layer may include a plurality of second pores.

In an eleventh aspect, according to the tenth aspect, a ratio of the second porosity of the second anode active material layer defined by Equation 4 below to the first porosity of the first anode active material layer defined by Equation 3 below may be 1.2 to 2.0. [Equation 3] $First porosity \left(%\right) = \left(VP1/VL1\right) \times 100$ [Equation 4] $Second porosity \left(%\right) = \left(VP2/VL2\right) \times 100$

In Equation 3 and Equation 4, VL1 denotes a volume of the first anode active material layer, VP1 denotes the total volume of the plurality of first pores, VL2 denotes a volume of the second anode active material layer, and VP2 denotes the total volume of the plurality of second pores.

In a twelfth aspect, according to the eleventh aspect, the first porosity may be 15% to 25%.

In a thirteenth aspect, according to any one of the first to the twelfth aspects, the second porosity may be 25% to 40%.

A lithium secondary battery according to a fourteenth aspect of the present disclosure includes the anode for a lithium secondary battery according to any one of the first to the thirteenth aspects and a cathode disposed opposite the anode.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

### Examples 1 to 15, and Comparative Examples 6 to 9

### (1) Preparation of Anode

### 1) Preparation of First anode active material layer

93.4 wt% of natural graphite, 3 wt% of artificial graphite as a conductive material, 2.4 wt% of styrene-butadiene rubber (SBR) as a binder, and 1.2 wt% of carboxymethyl cellulose (CMC) as a thickener were mixed to prepare a first anode slurry.

The first anode slurry was coated onto a copper current collector, and then dried and roll-pressed to form a first anode active material layer.

### 2) Preparation of Second Anode Active Material Layer

95.4 wt% of artificial graphite, 3 wt% of artificial graphite as a conductive material, 0.4 wt% of styrene-butadiene rubber (SBR) as a binder, and 1.2 wt% of carboxymethyl cellulose (CMC) as a thickener were mixed to prepare a second anode slurry.

The second anode slurry was coated onto the first anode active material layer, and then dried and roll-pressed to form an anode including a second anode active material layer.

During the formation of the first and second anode active material layers, variables such as roll-pressing time, pressure, and loading amount were comprehensively changed to fabricate and select anodes in which the first Raman peak area ratio, the second Raman peak area ratio, the thickness of the second anode active material layer relative to the combined thickness of the first anode active material layer and the second anode active material layer, and the first and second porosities were controlled as shown in Tables 1 and 2 below.

### (2) Manufacture of Lithium Half-Cell

A lithium half-cell including the anode and using lithium metal (Li metal) as a counter electrode (cathode) was manufactured.

Specifically, a separator (polyethylene, thickness 20 µm) was interposed between the prepared anode and lithium metal (thickness 1 mm) to form a lithium coin half-cell in accordance with the CR2016 standard (diameter 20 mm, thickness 1.6 mm).

The assembly of the lithium metal/separator/anode was placed in a coin cell plate. After injecting an electrolyte solution, a cap was placed thereon and the cell was clamped. The electrolyte solution, prepared by dissolving 1 M LiPF₆ in a mixed solvent of EC/EMC (3:7; volume ratio), and further adding 2.0 vol% of fluoroethylene carbonate (FEC) based on the total volume of the electrolyte solution, was used as the electrolyte solution. After clamping, the cell was impregnated for 3 to 24 hours, followed by 3 cycles of charge and discharge at 0.1C (charging conditions: CC-CV 0.1C 0.01 V 0.01C cut-off; discharging conditions: CC 0.1C 1.5 V cut-off).

### Example 16

An anode and a lithium half-cell were manufactured in the same manner as in Example 1, except that an amorphous carbon coating was performed on the surface of the natural graphite of the first anode active material layer.

### Comparative Example 1

An anode and a lithium half-cell were manufactured in the same manner as in Example 1, except that the second anode active material layer was formed directly on the copper current collector without forming the first anode active material layer.

The thickness of the second anode active material layer in Comparative Example 1 was substantially the same as the combined thickness of the first anode active material layer and the second anode active material layer in Example 1.

### Comparative Example 2

An anode and a lithium half-cell were manufactured in the same manner as in Comparative Example 1, except that an equal amount of natural graphite was used instead of the artificial graphite in the second anode active material layer.

### Comparative Example 3

An anode and a lithium half-cell were manufactured in the same manner as in Example 1, except that an equal amount of natural graphite was used instead of the artificial graphite in the second anode active material layer.

### Comparative Example 4

An anode and a lithium half-cell were manufactured in the same manner as in Example 1, except that an equal amount of artificial graphite was used instead of the natural graphite in the first anode active material layer.

### Comparative Example 5

An anode and a lithium half-cell were manufactured in the same manner as in Example 1, except that an equal amount of artificial graphite was used instead of the natural graphite in the first anode active material layer, and an equal amount of natural graphite was used instead of the artificial graphite in the second anode active material layer.

### Experimental Example

### (1) Measurement of First Raman Peak Area Ratio and Second Raman Peak Area Ratio

A sample was prepared by cutting the anode manufactured according to the above-described examples and comparative examples.

The second Raman peak area ratio was measured for the second anode active material layer, which is the outermost layer of the sample, using a 532 nm laser Raman analyzer (Laser Raman Spectroscopy) (model name: Invia, manufacturer: RENISHAW).

The specific measurement method of the Raman analyzer was as follows.
i) The power of the Raman analyzer was turned on.
ii) A Spectral Acquisition Setup window was opened.
iii) 'Static' was selected as the Grating Scan Type, and 1500 (Raman Shift (cm⁻¹)) was entered as the Center value.
iv) In Configuration, 532 nm edge was selected as the Laser, 1800/mm (vis) as the Grating, and Renishaw 1024 StramLine CCD as the Detector.
v) In the acquisition condition setting, the Exposure Time was set to 10 s, the Objective to 50, the Accumulation to 5, the Laser Power to 5% (1.5 mW), and the Focus Level to 0%.
vi) After placing the sample on the sample stage and checking the measurement area, the Raman spectrum of the sample was acquired.

In the Raman spectroscopic spectrum, the area of a peak having the maximum height in a wavenumber range of 1320 cm⁻¹ to 1390 cm⁻¹ (e.g., the D band) (AD2) and the area of a peak having the maximum height in a wavenumber range of 1575 cm⁻¹ to 1590 cm⁻¹ (e.g., the G band) (AG2) were measured. The measured peak areas were applied to Equation 2 to calculate the second Raman peak area ratio.

The second anode active material layer was partially removed by repeatedly attaching and detaching 3M tape to and from an upper surface of the sample. The 3M tape was repeatedly attached and detached until the anode current collector was visible, thereby separating a portion of the first anode active material layer with the separated portion remaining attached to the 3M tape.

For the separated first anode active material layer, the first Raman peak area ratio was measured using the same equipment and method as those used for measuring the second Raman peak area ratio. Specifically, the area of a peak having the maximum height in a wavenumber range of 1320 cm⁻¹ to 1390 cm⁻¹ (e.g., the D band) in the Raman spectroscopic spectrum (AD1) and the area of a peak having the maximum height in a wavenumber range of 1575 cm⁻¹ to 1590 cm⁻¹ (e.g., the G band) in the Raman spectroscopic spectrum (AG1) were measured. The measured peak areas were applied to Equation 1 to calculate the first Raman peak area ratio.

The ratio of the first Raman peak area ratio to the second Raman peak area ratio was calculated.

### (2) Measurement of First Porosity and Second Porosity

A sample was prepared by cutting the anode manufactured according to the above-described examples and comparative examples. In the sample, analysis was performed excluding an approximately 10 µm-thick region adjacent to the copper current collector in the first anode active material layer and an approximately 10 µm-thick region adjacent to the outer surface of the second anode active material layer.

The sample was loaded into an XRM (Zeiss Xradia 620 Versa, Zeiss) to obtain a 3D modeling image.

The XRM measurement conditions were as follows.
i) Source condition: 50 kV, 4.5 W
ii) Voxel size: 300 nm

The 3D modeling image was analyzed using analysis software (MatDict Material Characterization, GeoDict Software) to measure the first porosity of the first anode active material layer defined by Equation 3 and the second porosity of the second anode active material layer defined by Equation 4.

The ratio of the second porosity to the first porosity was calculated.

### (3) Evaluation of Capacity Retention During Fast Charging

A lithium half-cell manufactured according to the above-described examples and comparative examples was charged to reach a depth of discharge (DOD) of 77.2% within 20 minutes using a step charging method with a C-rate of 3.25C/3.0C/2.75C/2.5C/2.25C/2.0C/1.75C/1.5C/1.25C/1.0C/0.75C/0.5C, and then discharged at 1C. Fast-charging evaluation was performed by repeating cycles in which the charging and discharging described above were defined as one cycle. After repeating 300 cycles with a 10-minute waiting time between charge and discharge cycles, the discharge capacity at the 300th cycle was divided by the discharge capacity at the first cycle and then multiplied by 100 to evaluate the capacity retention.

### (4) Evaluation of Resistance (DCIR) Increase Rate

For the lithium half-cells manufactured according to the above-described examples and comparative examples, fast charging and discharging were repeated in the same manner as in Experimental Example (3), and the resistance (DCIR) was measured.

After 1 cycle and after 300 cycles, the discharged lithium half-cells were each charged at 1C according to the fast-charging conditions of Experimental Example (3) to reach a DOD of 50%, and then discharged at 1C for 30 seconds. The voltage drop (V) over 10 seconds during discharge was measured to calculate the resistance (DCIR).

The resistance at the 300th cycle was divided by the resistance at the first cycle and then multiplied by 100 to evaluate the resistance increase rate.

The measurement and evaluation results are shown in Tables 1 and 2 below.

**[TABLE 1]**

| | First Raman peak area ratio | Second Raman peak area ratio | Ratio of first Raman peak area ratio to second Raman peak area ratio | Thickness of second anode active material layer relative to the combined thickness of first and second anode active material layers (%) |
|---|---|---|---|---|
| Example 1 | 1.28 | 0.32 | 4.00 | 50 |
| Example 2 | 1.5 | 0.40 | 3.75 | 70 |
| Example 3 | 1.61 | 0.46 | 3.50 | 50 |
| Example 4 | 1.94 | 0.42 | 4.61 | 50 |
| Example 5 | 1.03 | 0.22 | 4.68 | 50 |
| Example 6 | 1.15 | 0.39 | 2.95 | 50 |
| Example 7 | 1.99 | 0.39 | 5.03 | 50 |
| Example 8 | 1.33 | 0.41 | 3.20 | 30 |
| Example 9 | 1.29 | 0.35 | 3.69 | 40 |
| Example 10 | 1.20 | 0.27 | 4.44 | 60 |
| Example 11 | 1.32 | 0.32 | 4.13 | 70 |
| Example 12 | 1.06 | 0.22 | 4.82 | 20 |
| Example 13 | 1.85 | 0.49 | 3.78 | 80 |
| Example 14 | 1.05 | 0.35 | 3.00 | 50 |
| Example 15 | 1.87 | 0.38 | 4.92 | 50 |
| Example 16 | 1.32 | 0.31 | 4.26 | 50 |
| Comparative Example 1 | - | 0.41 | - | 100 |
| Comparative Example 2 | - | 1.49 | - | 100 |
| Comparative Example 3 | 1.47 | 1.45 | 1.01 | 50 |
| Comparative Example 4 | 0.39 | 0.40 | 0.975 | 50 |
| Comparative Example 5 | 0.33 | 1.31 | 0.25 | 50 |
| Comparative Example 6 | 0.97 | 0.27 | 3.59 | 50 |
| Comparative Example 7 | 2.03 | 0.46 | 4.41 | 50 |
| Comparative Example 8 | 1.13 | 0.18 | 6.28 | 50 |
| Comparative Example 9 | 1.84 | 0.53 | 3.47 | 50 |

**[TABLE 2]**

| | First porosity (%) | Second porosity (%) | Ratio of second porosity to first porosity | Capacity retention during fast charging (%, 300 cycles) | Resistance increase rate (%, 300 cycles) |
|---|---|---|---|---|---|
| Example 1 | 20.1 | 28.3 | 1.41 | 98 | 100 |
| Example 2 | 19.7 | 27.5 | 1.40 | 97 | 101 |
| Example 3 | 21.0 | 29.8 | 1.42 | 97 | 101 |
| Example 4 | 21.2 | 30.3 | 1.43 | 96 | 102 |
| Example 5 | 21.5 | 29.2 | 1.36 | 96 | 101 |
| Example 6 | 25.1 | 31.0 | 1.24 | 93 | 104 |
| Example 7 | 14.8 | 28.0 | 1.89 | 92 | 104 |
| Example 8 | 23.5 | 32.5 | 1.38 | 95 | 101 |
| Example 9 | 21.6 | 27.9 | 1.29 | 96 | 101 |
| Example 10 | 22.0 | 28.8 | 1.31 | 96 | 102 |
| Example 11 | 24.1 | 31.0 | 1.29 | 94 | 102 |
| Example 12 | 24.8 | 32.1 | 1.29 | 90 | 105 |
| Example 13 | 15.8 | 28.1 | 1.78 | 92 | 102 |
| Example 14 | 24.8 | 29.4 | 1.19 | 89 | 105 |
| Example 15 | 15.4 | 31.1 | 2.02 | 90 | 104 |
| Example 16 | 19.5 | 29.6 | 1.52 | 98 | 100 |
| Comparative Example 1 | - | 24.2 | - | 72 | 106 |
| Comparative Example 2 | - | 26.7 | - | 87 | 117 |
| Comparative Example 3 | 19.4 | 20.2 | 1.04 | 78 | 122 |
| Comparative Example 4 | 32.0 | 36.8 | 1.15 | 71 | 113 |
| Comparative Example 5 | 30.9 | 19.2 | 0.62 | 74 | 107 |
| Comparative Example 6 | 26.3 | 29.5 | 1.12 | 85 | 107 |
| Comparative Example 7 | 14.2 | 28.4 | 2.00 | 83 | 106 |
| Comparative Example 8 | 24.4 | 46.0 | 1.89 | 84 | 107 |
| Comparative Example 9 | 14.9 | 26.7 | 1.79 | 84 | 108 |

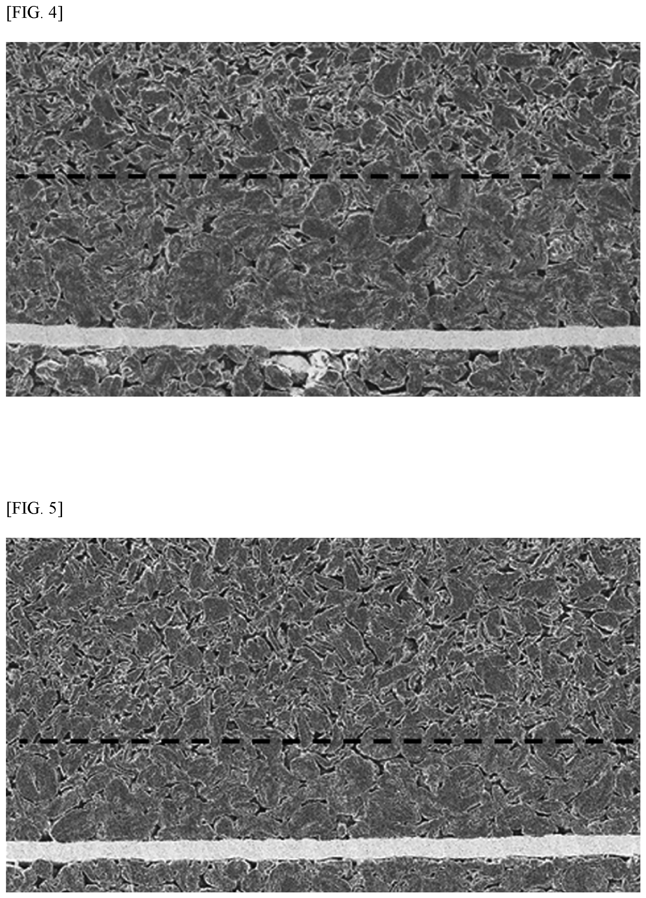

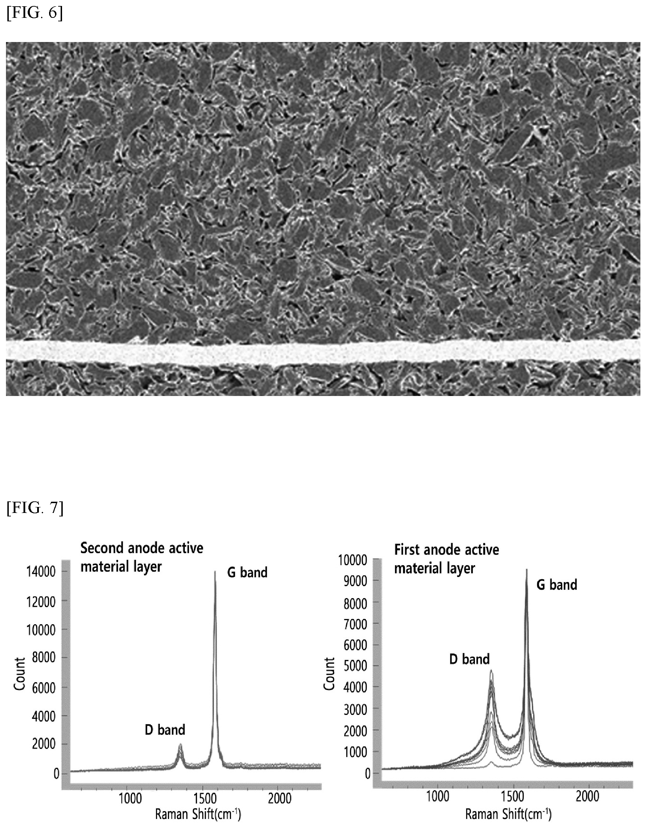

FIG. 4 is a scanning electron microscopy (SEM) image showing a cross-section of the anode of Example 1. FIG. 5 is an SEM image showing a cross-section of the anode of Example 2. FIG. 6 is an SEM image showing a cross-section of the anode of Comparative Example 1.

Referring to FIGS. 4 to 6, relatively more pores were included in the second anode active material layer than in the first anode active material layer.

FIG. 7 is a Raman spectroscopic spectrum of each of the first anode active material layer and the second anode active material layer of Example 1.

Referring to Tables 1 and 2, in the examples where the first Raman peak area ratio was 1 to 2 and the second Raman peak area ratio was 0.2 to 0.5, the fast-charging capacity retention was improved and the resistance increase rate was reduced compared to the comparative examples.

In Examples 6 and 7, where the ratio of the first Raman peak area ratio to the second Raman peak area ratio was outside a range of 3 times 5 times, the fast-charging capacity retention was relatively reduced and the resistance increase rate was increased.

In Examples 12 and 13, where the thickness of the second anode active material layer relative to the combined thickness of the first anode active material layer and the second anode active material layer was outside a range of 30% to 70%, the fast-charging capacity retention was relatively reduced and the resistance increase rate was increased.

In Examples 14 and 15, where the ratio of the second porosity to the first porosity was outside a range of 1.2 to 2.0, the fast-charging capacity retention was relatively reduced and the resistance increase rate was increased.

## Claims

1. An anode for a lithium secondary battery comprising:
an anode current collector;
a first anode active material layer disposed on at least one surface of the anode current collector; and
a second anode active material layer disposed on the first anode active material layer and comprising artificial graphite,
wherein a first Raman peak area ratio of the first anode active material layer defined by Equation 1 below is 1 to 2, and a second Raman peak area ratio of the second anode active material layer defined by Equation 2 below is 0.2 to 0.5: [Equation 1] $First Raman peak area ratio = AD 1 / AG 1$ [Equation 2] $Second Raman peak area ratio = AD 2 / AG 2$
(wherein in Equation 1 and Equation 2, AD1 denotes an area of a peak having the maximum height in a wavenumber range of 1320 cm⁻¹ to 1390 cm⁻¹ of the Raman spectroscopic spectrum of the first anode active material layer, AG1 denotes an area of a peak having the maximum height in a wavenumber range of 1575 cm⁻¹ to 1590 cm⁻¹ of the Raman spectroscopic spectrum of the first anode active material layer,
AD2 denotes an area of a peak having the maximum height in a wavenumber range of 1320 cm⁻¹ to 1390 cm⁻¹ of the Raman spectroscopic spectrum of the second anode active material layer, and AG2 denotes an area of a peak having the maximum height in a wavenumber range of 1575 cm⁻¹ to 1590 cm⁻¹ of the Raman spectroscopic spectrum of the second anode active material layer).

2. The anode for a lithium secondary battery according to claim 1, wherein the first Raman peak area ratio is 3 times to 5 times the second Raman peak area ratio.

3. The anode for a lithium secondary battery according to claim 1, wherein the first Raman peak area ratio is 1.2 to 1.5.

4. The anode for a lithium secondary battery according to claim 1, wherein the second Raman peak area ratio is 0.3 to 0.4.

5. The anode for a lithium secondary battery according to claim 1, wherein the second anode active material layer has a thickness of 30% to 70% relative to the combined thickness of the first anode active material layer and the second anode active material layer.

6. The anode for a lithium secondary battery according to claim 1, wherein the second anode active material layer has a thickness of 40% to 60% relative to the combined thickness of the first anode active material layer and the second anode active material layer.

7. The anode for a lithium secondary battery according to claim 1, wherein the first anode active material layer comprises natural graphite.

8. The anode for a lithium secondary battery according to claim 7, wherein the natural graphite comprises a carbon coating disposed on a surface thereof.

9. The anode for a lithium secondary battery according to claim 8, wherein the carbon coating includes amorphous carbon.

10. The anode for a lithium secondary battery according to claim 1, wherein the first anode active material layer comprises a plurality of first pores, and the second anode active material layer comprises a plurality of second pores.

11. The anode for a lithium secondary battery according to claim 10, wherein a ratio of the second porosity of the second anode active material layer defined by Equation 4 below to the first porosity of the first anode active material layer defined by Equation 3 below is 1.2 to 2.0: [Equation 3] $First porosity \left(%\right) = \left(VP1/VL1\right) \times 100$ [Equation 4] $Second porosity \left(%\right) = \left(VP2/VL2\right) \times 100$ (wherein in Equation 3 and Equation 4, VL1 denotes a volume of the first anode active material layer, VP1 denotes the total volume of the plurality of first pores, VL2 denotes a volume of the second anode active material layer, and VP2 denotes the total volume of the plurality of second pores).

12. The anode for a lithium secondary battery according to claim 11, wherein the first porosity is 15% to 25%.

13. The anode for a lithium secondary battery according to claim 11, wherein the second porosity is 25% to 40%.

14. A lithium secondary battery comprising:
the anode for a lithium secondary battery according to claim 1; and
a cathode disposed opposite the anode.
